# EUROPÄISCHE PATENTANMELDUNG

(11) **EP 2 138 805 A2**
(43) Veröffentlichungstag der Anmeldung: **30.12.2009**
(21) Anmeldenummer: 09162242.3
(22) Anmeldetag: 09.06.2009
(51) Int. Cl.: G01C 21/36

(54) **Navigationsvorrichtung**

(30) Priorität: 27.06.2008 DE 102008002718
(71) Anmelder: ROBERT BOSCH GMBH, 70442 Stuttgart (DE)
(72) Erfinder: Brenner, Matthias-Bastian, 70771, Leinfelden-Echterdingen (DE)

(57) **Zusammenfassung**

Die Erfindung betrifft eine Navigationsvorrichtung (1) zur Ausgabe eines Fahrhinweises an einen Fahrer eines Fahrzeugs, mit einer Recheneinheit (3) zur Bestimmung von Fahrhinweisen an Positionen entlang einer Fahrtroute zur Zielführung des Fahrzeugs zu einem Fahrziel sowie zur Bestimmung der Positionen zur Bereitstellung der Fahrhinweise, gekennzeichnet, durch eine Ausgabeeinheit (5, 6) zur Ausgabe eines Hinweissignals zum Hinweis auf den zur akustischen Ausgabe bereitstehenden Fahrhinweis in einem vorgegebenen Abstand vor oder mit einem Erreichen einer Position zur Bereitstellung des Fahrhinweises und durch eine Bedieneinheit (7, 9, 10) zur Veranlassung einer akustischen Ausgabe des bereitstehenden Fahrhinweises nach einer Ausgabe des Hinweissignals.

## Beschreibung

### Stand der Technik

Die Erfindung geht aus von einer Navigationsvorrichtung und einem Verfahren zur Ausgabe eines Fahrhinweises nach der Gattung der unabhängigen Ansprüche. Aus der DE 103 26 042 A1 ist bereits eine Navigationsvorrichtung zur Ausgabe von Wegehinweisen zur Führung zu einem Ziel bekannt, bei der die Ausgabe von Wegehinweisen deaktiviert werden kann und die Navigation dennoch fortgeführt werden kann, so dass bei einer erneuten Aktivierung der Ausgabe sofort aktuelle Wegehinweise zur Verfügung stehen. Ferner ist es bekannt, bei Navigationssystemen die Lautstärke einer Sprachausgabe zu reduzieren und gegebenenfalls die Sprachausgabe vollständig stumm zu schalten.

Offenbarung der Erfindung

### Vorteile der Erfindung

Die erfindungsgemäße Navigationsvorrichtung mit den Merkmalen des unabhängigen Anspruchs hat demgegenüber den Vorteil, dass bei einem bereitstehenden Fahrhinweis zunächst ein Hinweissignal auf das Bereitstehen dieses Fahrhinweises ausgegeben wird. Der Fahrer kann nun entscheiden, ob er tatsächlich eine vollständige Ausgabe des akustischen Fahrhinweises wünscht. Hiermit wird erreicht, dass ein Fahrer über das Bereitstehen eines Fahrhinweises zur akustischen Ausgabe informiert wird, ohne dass jedoch der Fahrer durch die akustische Ausgabe des vollständigen Fahrhinweises selbst gestört oder gegebenenfalls sogar erschreckt wird. Auch nach einer längeren Pause, in der keine akustische Ausgabe erfolgt ist, kann somit ein dezenter Hinweis auf ein Bereitstehen eines Fahrhinweises ausgegeben werden. Ferner ist für den Fall, dass ein Fahrer eine Fahrstrecke gegebenenfalls bereits teilweise kennt, einerseits eine durch das Hinweissignal bereits gegebene Erinnerung ausreichend, um den Fahrer zu der korrekten Fahrhandlung zu verleiten, ohne dass dieser jedoch die gesamte, vollständige akustische Ausgabe des Fahrhinweises zu hören braucht. Darüber hinaus ist es für einen Fahrer andererseits möglich, sich den vollständigen Fahrhinweis durch einfache Anforderung noch zu Gehör zu bringen, insbesondere dann, wenn der Fahrer aufgrund der aktuellen Verkehrssituation eine Anzeige nicht betrachten kann oder selbst wenn er tatsächlich eine Ausgabe des vollständigen Fahrhinweises für ein korrektes Fahren benötigt. Durch eine einfache Anforderung kann dabei eine Bereitstellung des bereits durch das Hinweissignal angekündigten, bereitstehenden Fahrhinweises erleichtert werden, ohne dass beispielsweise aufwendige Einstellungen an der Navigationsvorrichtung, beispielsweise eine mehrfache Auswahl von Menü-Punkten, für eine Veranlassung einer akustischen Ausgabe des Fahrhinweises erforderlich wäre.

Durch die in den abhängigen Ansprüchen aufgeführten Maßnahmen sind vorteilhafte Weiterbildungen und Verbesserungen der in dem unabhängigen Anspruch angegebenen Navigationsvorrichtung möglich. So ist es vorteilhaft, dass eine Ausgabe des Fahrhinweises nach einer Ausgabe des Hinweissignales nur dann erfolgt, wenn eine entsprechende Ausgabe noch Sinn macht. Entsprechend kann eine Ausgabe des Fahrhinweises auch nach einer Anforderung dann unterbleiben, wenn seit der Position, an dem das Hinweissignal ausgegeben worden ist, bereits eine derartige Fahrstrecke zurückgelegt wurde, dass entweder die Fahrhandlung bereits ausgeführt wurde, oder ohne einen Wendevorgang nicht mehr nachzuholen ist. Um dies festzustellen, können beispielsweise eine zurückgelegte Fahrstrecke oder eine verstrichene Zeit oder beide Kriterien zusammen herangezogen werden. Ferner ist es auch möglich zu überprüfen, ob die entsprechende Fahrhandlung, beispielsweise ein Abbiegen, bereits vorgenommen wurde.

Ferner ist es vorteilhaft, als Ausgabeeinheit für das Hinweissignal eine Lautsprechereinheit zur Ausgabe eines Signaltons vorzusehen. Ein entsprechender Signalton kann verhältnismäßig kurz und beispielsweise angepasst an die Lautstärke eines Autoradios gewählt werden, so dass durch die Ausgabe des Signaltons insbesondere eine Audiowiedergabe, beispielsweise eines Musik-Programms, kaum gestört wird. Ein Fahrer kann dann bereits auf das Hinweissignal reagieren, gegebenenfalls eine akustische Ausgabe des Fahrhinweises anfordern oder beispielsweise eine Anzeige im Fahrzeug betrachten, auf der der Fahrhinweis bildlich dargestellt wird.

Ferner ist es vorteilhaft, für den akustisch vollständig ausgegebenen Fahrhinweis wenigstens eine Ausgabe einer Fahrtrichtung und eines Fahrmanövers vorzusehen, da hierdurch der Fahrer über ein von ihm vorzunehmendes Fahrmanöver recht umfassend informiert wird. Eine Betrachtung einer Anzeige kann entfallen und der Fahrer kann dennoch sein Fahrzeug entlang der geplanten Fahrtroute führen.

Eine besonders einfache Anforderung ist dann möglich, wenn eine Bedieneinheit zur Anforderung an einem Lenkrad des Fahrzeugs angeordnet ist. Der Fahrer muss somit von dem Lenkrad nicht zu einer anderen Bedieneinheit umgreifen. Vielmehr ist es für ihn möglich, eine an dem Lenkrad beispielsweise als Bedieneinheit angeordnete Taste zur Anforderung der akustischen Ausgabe des Fahrhinweises durch eine Betätigung einfach auszulösen.

Ferner ist es vorteilhaft, eine Anforderung der akustischen Ausgabe des Fahrhinweises mittels einer Spracheingabeeinheit anzufordern. In diesem Fall ist lediglich die Eingabe eines entsprechenden Sprachbefehls durch einen Benutzer erforderlich, so dass ein akustischer Hinweis auf einfache Weise angefordert werden kann.

Es ist weiterhin vorteilhaft, eine optische Ausgabeeinheit im Fahrzeug vorzusehen, so dass der Fahrer ab dem Zeitpunkt der Ausgabe des Hinweissignals gegebenenfalls auch eine Anzeige betrachten kann, um sich eine Information über den Fahrhinweis zu verschaffen. Sollten die Verkehrsverhältnisse es zulassen, kann der Fahrer durch einen kurzen Blick auf die Anzeige ebenfalls den Informationsgehalt des Fahrhinweises erfassen, ohne dass es einer Anforderung akustischen Ausgabe bedarf.

Entsprechende Vorteile ergeben sich durch ein erfindungsgemäßes Verfahren, gemäß dem ein Fahrhinweis nur nach Eingabe einer weiteren Anforderung nach einer zuvorigen Ausgabe eines Hinweissignals auf die Bereitstellung des Fahrhinweises ausgegeben wird. Entsprechende Vorteile ergeben sich ebenfalls für die Ausgabe des Hinweissignals in Form eines Signaltons oder für eine zusätzliche optische Ausgabe des Fahrhinweises.

### Kurze Beschreibung der Zeichnungen

Ausführungsbeispiele der Erfindung sind in den Zeichnungen dargestellt und in der nachfolgenden Beschreibung näher erläutert. Es zeigen
Figur 1 eine erfindungsgemäße Navigationsvorrichtung in einer schematischen Darstellung,
Figur 2 eine Ansicht auf eine Instrumententafel und eine Windschutzscheibe eines Fahrzeugs mit einer erfindungsgemäßen Navigationsvorrichtung,
Figur 3 ein Ausführungsbeispiel für einen erfindungsgemäßen Verfahrensablauf.

### Ausführungsformen der Erfindung

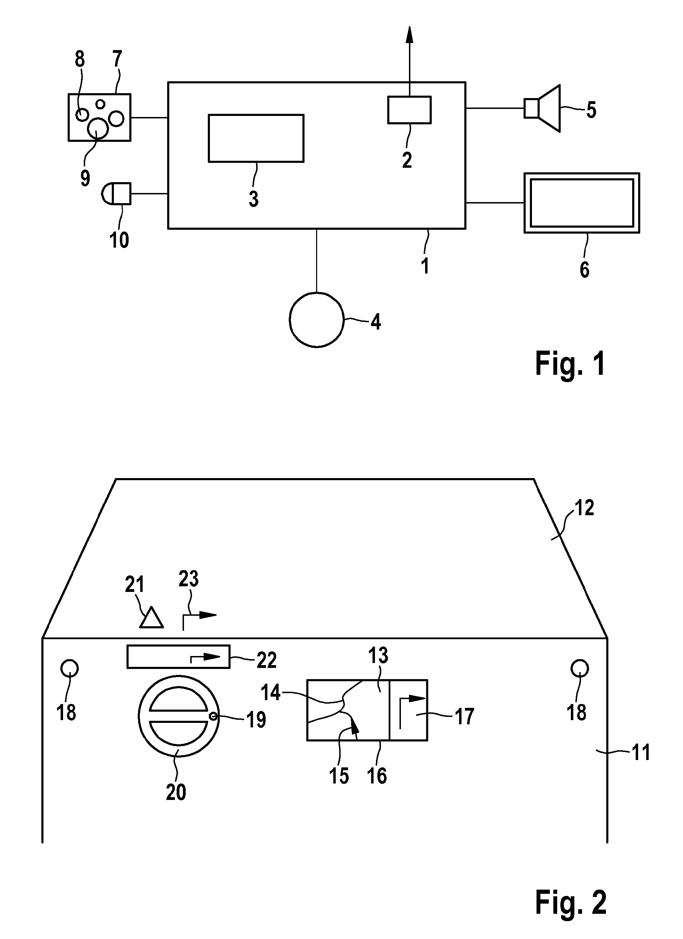

In der Figur 1 ist eine Navigationsvorrichtung 1 in einem Fahrzeug dargestellt, die dazu dient, eine Fahrtroute zu einem Fahrziel zu bestimmen. Die Navigationsvorrichtung 1 verfügt hierzu über eine Ortungseinheit 2, die beispielsweise als eine GPS-Ortungseinheit ausgeführt ist. Eine Recheneinheit 3 bestimmt eine Fahrstrecke von einer aktuellen Position des Fahrzeugs zu einem Fahrziel. Hierzu greift die Recheneinheit 3 vorzugsweise auf eine digitale Karte 4 eines Straßennetzes zu, die beispielsweise über eine Speicherkarte oder einen eingebauten Speicher der Navigationsvorrichtung 1 zur Verfügung gestellt wird. Die Fahrtroute führt durch das Straßennetz und berührt dabei im Allgemeinen auch Kreuzungen und Verzweigungspunkte. Für diese Positionen bestimmt die Recheneinheit 3 Fahrhinweise, die an einen Fahrer des Fahrzeugs ausgegeben werden, in dem sich die Navigationsvorrichtung 1 befindet. Zur Ausgabe ist die Navigationsvorrichtung 1 mit einem Lautsprecher 5 verbunden, der beispielsweise als ein Radio-Lautsprecher in dem Fahrzeug ausgeführt ist. Ferner kann aber auch die Navigationsvorrichtung 1 einen eigenen Lautsprecher aufweisen.

In einer Ausführungsform ist die Navigationsvorrichtung 1 zudem mit einer Anzeige 6 verbunden. In der Anzeige 6 können beispielsweise in piktogrammförmiger Form Abbiegehinweise an einen Fahrer ausgegeben werden. Ferner ist es möglich, auch eine Landstraßendarstellung der digitalen Karte 4 in der Anzeige 6 darzustellen. Eine Eingabe des Fahrziels und eine weitere Steuerung der Navigationsvorrichtung 1 kann über eine Bedieneinheit 7 erfolgen, die beispielsweise Drucktasten 8 und/oder Drehtasten 9 aufweist. Ferner ist es auch möglich, zur Steuerung der Navigationsvorrichtung 1 die Anzeige 6 als eine Touchscreen-Anzeige auszuführen, wobei in der Anzeige 6 dargestellte Menüpunkte zur Steuerung der Navigationsvorrichtung 1 und insbesondere zur Auswahl eines Fahrziels berührt werden und die Berührung erfasst wird. In einer weiteren Ausführungsform ist es auch möglich, die Navigationsvorrichtung 1 mit einem Mikrophon 10 zu verbinden, das einer Sprachsteuerung der Navigationsvorrichtung 1 dient.

Die Fahrhinweise können in verschiedener Form ausgegeben werden. Besonders vorteilhaft ist es, tatsächlich vorzunehmende Fahrmanöver zu beschreiben, wie beispielsweise "nächste Straße rechts abbiegen", "in 200m links abbiegen" oder "dem Straßenverlauf 2km folgen". Zusätzlich zu der akustischen Ausgabe können entsprechende piktogrammförmige Symbole in der Anzeige 6 dargestellt werden. Die akustische Ausgabe sowie die Anzeigendarstellung der Fahrhinweise kann in bevorzugter Form durch einen Benutzer eingestellt werden. So ist es möglich, beispielsweise die Anzeige von Fahrhinweisen in der Anzeige 6 zu deaktivieren, so dass lediglich eine akustische Ausgabe erfolgt. Ferner ist es auch möglich, bei einer Anzeigendarstellung beispielsweise zwischen einer Kartendarstellung, einer lediglich piktogrammförmigen Darstellung oder einer Kombination dieser beiden Darstellungen zu wechseln. Entsprechend kann auch die akustische Ausgabe in einer ersten Betriebsart komplett stumm geschaltet werden. In einer weiteren Betriebsart ist es möglich, die Navigationsvorrichtung 1 so einzustellen, dass jeder Fahrhinweis an jeder entsprechenden Position entlang der Fahrtroute akustisch ausgegeben wird. Eine im Folgenden erläuterte, erfindungsgemäße Einstellung einer akustischen Ausgabe kann die Navigationsvorrichtung 1 als alleinige Betriebsart, aber auch umschaltbar zu einer oder mehreren der oben genannten Betriebsarten aufweisen.

Bei einer erfindungsgemäßen Einstellung wird bei Erreichen von Positionen, an der ein Fahrhinweis normalerweise ausgegeben würde, oder eine vorgegebene Strecke vor dieser Position, beispielsweise 100 m vor dieser Position, statt der Ausgabe des Fahrhinweises lediglich ein Hinweissignal an den Fahrer ausgegeben, das anzeigt, dass nunmehr ein Fahrhinweis zur Ausgabe bereitsteht. In einer ersten Ausführungsform kann dies eine Anzeige eines entsprechenden, besonderen Symbols sein, das in der Anzeige 6 oder in einer anderen Anzeige des Fahrzeugs dargestellt wird. In einer weiteren Ausführungsform wird ein einzelner Hinweiston oder eine Tonfolge als Hinweis auf einen zur akustischen Ausgabe bereitstehenden Fahrhinweis über den Lautsprecher 5 ausgegeben. Unternimmt der Fahrer nun keine weitere Eingabe in die Navigationsvorrichtung 1, so bleibt es bei der Ausgabe dieses Hinweissignals und die Routenführung entlang der Fahrtroute wird fortgeführt. Ein akustischer Fahrhinweis, beispielsweise "Nächste Straße rechts abbiegen", wird nicht ausgegeben. Wird eine nächste Position erreicht, an der ein Fahrhinweis ausgegeben werden soll, so erfolgt - bei einer ungeänderten Betriebsart der Navigationsvorrichtung 1- in gleicher Weise lediglich die Ausgabe eines Hinweissignals.

Der Fahrer hat jedoch nach einer Ausgabe des Hinweissignals auf den zur Ausgabe bereitstehenden akustischen Fahrhinweis die Möglichkeit, durch Betätigen der Bedieneinheit 7, beispielsweise durch Drücken einer vorgegebenen Drucktaste 8, eine akustische Ausgabe des Fahrhinweises anzufordern. Wird beispielsweise 400 m vor einer Kreuzung, an der der Fahrer nach rechts abbiegen soll, zunächst ein Hinweissignal auf einen zur akustischen Ausgabe bereitstehenden Fahrhinweis ausgegeben, so kann der Fahrer, nachdem er beispielsweise zwischenzeitlich 150 m gefahren ist, durch Drücken der Bedientaste 9 eine akustische Ausgabe des Fahrhinweises anfordern. Nach einer Betätigung der Bedieneinheit 7 wird dann beispielsweise der Fahrhinweis "Nächste Straße rechts abbiegen" ausgegeben.

In einer weiteren Ausgestaltung kann dabei der Inhalt des Fahrhinweises gegebenenfalls an die sich an dem Ort der tatsächlichen Ausgabe des akustischen Fahrhinweises vorliegenden Bedingungen angepasst werden. Wird z.B. ein Abstand zu der vorzunehmenden Fahrhandlung in die akustische Ausgabe des Fahrhinweises mit einbezogen, so kann der akustisch ausgegebene Abstand an den bei der Ausgabe vorliegenden tatsächlichen Abstand des Fahrzeugs zu dem Ort der Fahrhandlung angepasst werden. Drückt der Fahrer die Taste beispielsweise bei einem Abstand von 250 m vor der Kreuzung, so wird ausgegeben "in 250 m rechts abbiegen". Bei einer Betätigung in einem auf 150 m verringerten Abstand, wird entsprechend ein Fahrhinweis "in 150 m rechts abbiegen" ausgegeben. Entsprechend kann auch der Ort einer Fahrhandlung in Bezug zu andere Abzweigungen von der Straße angegeben werden, beispielsweise dritte, zweite oder nächste Straße rechts abbiegen.

In einer Ausführungsform ist zu einer erleichterten Bedienung die Bedieneinheit 7 an einem Lenkrad des Fahrzeugs angeordnet. Somit kann eine Taste 9 beispielsweise an einer Oberfläche des Lenkrads angeordnet sein.

In einer weiteren Ausführungsform ist es auch möglich, dass ein Benutzer mittels des Mikrophons 10 über eine Spracheingabe eine akustische Ausgabe des Fahrhinweises in vollständiger Form veranlasst. Eine Spracheingabe kann beispielsweise über die gesprochenen Befehle "Fahrhinweis ausgeben" oder nur "Ausgeben" nach Ausgabe des Hinweissignals erfolgen.

Um zu verhindern, dass eine versehentliche oder absichtliche Betätigung einer Bedieneinheit zum Abrufen eines Fahrhinweises versehentlich betätigt und damit ein Fahrhinweis akustisch zu einem Zeitpunkt ausgegeben wird, an dem eine Position, an dem eine Durchführung sinnvoll gewesen wäre, bereits zurückliegt, wird in einer weiteren Ausführungsform nach der Anforderung vor der akustischen Ausgabe des Fahrhinweises überprüft, ob eine Ausgabe noch sinnvoll ist. In einer ersten Ausführungsform wird dabei eine zurückgelegte Fahrstrecke betrachtet. Hat das Fahrzeug seit der Ausgabe des Hinweissignals beispielsweise eine Strecke von 500 m zurückgelegt, so wird der Fahrhinweis nicht mehr ausgegeben. Entsprechend kann auch ein unmittelbarer Vergleich mit einer Position der dem Fahrhinweis zugeordneten, durchzuführenden Fahrhandlung erfolgen. Ist das Fahrzeug beispielsweise an einer Abbiegestelle bereits vorbeigefahren, so erfolgt keine Ausgabe mehr. In einer Ausführungsform kann dann statt der Ausgabe des Fahrhinweises ein Fehlersignal ausgegeben werden, das sich bevorzugt von dem zuvor ausgegebenen Hinweissignal unterscheidet, beispielsweise durch einen Signalton anderer Frequenz oder eine andere Signalfolge. Hierdurch kann der Fahrer erkennen, dass eine akustische Ausgabe eines Fahrhinweises nun nicht mehr bereitsteht.

In der Figur 2 ist eine Ansicht auf eine Instrumententafel 11 und eine Windschutzscheibe 12 eines Fahrzeugs dargestellt. In einer Mittelkonsole des Fahrzeugs befindet sich eine Anzeige 16, in der sowohl eine Landkartendarstellung 13 mit eingezeichneten Straßen 14 und einer Position 15 des Fahrzeugs, als auch eine Piktogrammdarstellung 17 eines durchzuführenden Abbiegevorgangs dargestellt sind. Ferner sind Lautsprecher 18 im Fahrzeug zur Ausgabe von akustischen Fahrhinweisen und Hinweissignalen vorgesehen. In einer ersten Ausführungsform erfolgt die Ausgabe einer in der Figur 2 nicht dargestellten Navigationsvorrichtung 1 bei Annäherung an eine Abbiegeposition lediglich in der Anzeige 16 in der Mittelkonsole. Zudem wird ein Hinweissignal über die Lautsprecher 18 in Form eines Signaltons oder einer Signaltonfolge ausgegeben. Der Fahrer hat nun die Möglichkeit, durch eine Betätigung der Drucktaste 19 an einem Lenkrad 20 des Fahrzeugs eine akustische Ausgabe des Fahrhinweises zu veranlassen, in diesem Fall beispielsweise "An der nächsten Kreuzung nach rechts abbiegen.".

In einer weiteren Ausführungsform kann ergänzend oder statt des akustischen Hinweises in einer Head-Up-Anzeige des Fahrzeugs ein Hinweissignal 21 in die Windschutzscheibe 12 des Fahrzeugs eingeblendet werden. Ferner ist es auch möglich, neben der Piktogrammdarstellung 17 entsprechende Piktogrammdarstellungen in einem Anzeigeinstrument 22 vor dem Fahrer und/oder in der Head-Up-Anzeige 23 zur optischen Ausgabe eines Fahrhinweises darzustellen. In einer ersten Ausführungsform können diese Anzeigen 22, 23 eines Fahrhinweises bereits zusammen oder kurz nach einer Ausgabe des Hinweissignals ausgegeben werden. In einer anderen Ausführungsform ist es auch möglich, diese zusätzlichen Anzeigen erst dann vorzusehen, wenn ein Fahrer die Anforderung der akustischen Ausgabe des Fahrhinweises, beispielsweise über eine Betätigung der Taste 19, angefordert hat.

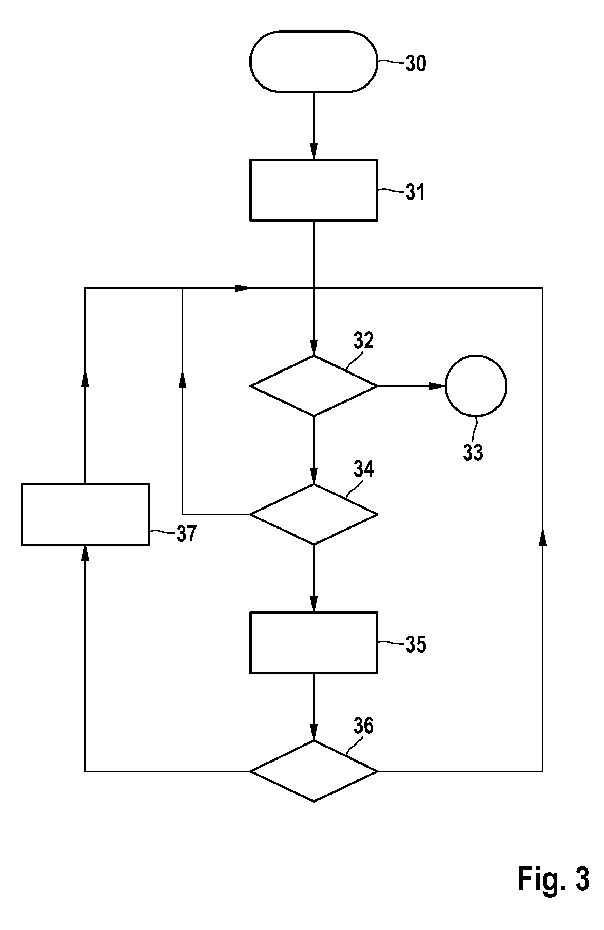

Ein Ausführungsbeispiel für einen erfindungsgemäßen Verfahrensablauf ist in der Figur 3 dargestellt. Ausgehend von einem Anfangsschritt 30, in dem beispielsweise ein Fahrziel eingegeben wird, wird zu einem Routenberechnungsschritt 31 weiterverzweigt, in dem eine Fahrtroute zu dem angegebenen Fahrziel berechnet wird. Anschließend wird zu einem ersten Prüfschritt 32 weiter verzweigt, in dem eine aktuelle Position des Fahrzeugs über die Ortungseinheit 2 ermittelt wird und mit einer Position des Fahrziels verglichen wird. Wird festgestellt, dass das Fahrziel erreicht wird, so wird in einem Endschritt 33 die Navigation beendet, beispielsweise mit der Ausgabe "Sie haben das Ziel erreicht". Falls das Fahrziel noch nicht erreicht wurde, so wird zu einem zweiten Prüfschritt 34 verzweigt, in dem überprüft wird, ob das Fahrzeug eine Position erreicht hat, an der ein Fahrhinweis zur Ausgabe bereitsteht. Ist dies nicht der Fall, so wird zu dem ersten Prüfschritt 32 zurückverzweigt und die aktuelle Position des Fahrzeugs wird erneut bestimmt. Wird in dem zweiten Prüfschritt 34 festgestellt, dass ein Fahrhinweis zur Ausgabe bereitsteht, so wird zu einem ersten Ausgabeschritt 35 verzweigt, gemäß dem ein Signalton oder eine Signaltonfolge als ein Hinweissignal ausgegeben werden, das keine Fahrempfehlung beinhaltet. Anschließend wird zu einem dritten Prüfschritt 36 verzweigt, in dem überprüft wird, ob eine Anforderung einer Ausgabe eines akustischen Fahrhinweises durch einen Benutzer erfolgt ist. Ist dies nicht der Fall, erfolgt also keine Anforderung, so wird ebenfalls zu dem ersten Prüfschritt 32 zurückverzweigt, ohne dass eine weitere Ausgabe erfolgt. Erfolgt jedoch eine Anforderung durch einen Benutzer, so wird zu einem zweiten Ausgabeschritt 37 verzweigt, in dem der für die Ausgabe bereitstehende Fahrhinweis, der wenigstens eine Fahrempfehlung beinhaltet, akustisch ausgegeben wird. In einer Ausführungsform kann in dem dritten Prüfschritt 36 zudem überprüft werden, ob das Fahrzeug zu einem Zeitpunkt der Anforderung sich noch in einem vorgegebenen Abstand zu der Position befindet, an dem das Hinweissignal gemäß dem ersten Ausgabeschritt 35 ausgegeben wird, oder ob die Fahrhandlung bereits ausgeführt wurde. Hat das Fahrzeug einen vorgegebenen Abstandsbereich verlassen oder wurde die dem Fahrhinweis zugrundeliegende Fahrhandlung bereits ausgeführt, wird von dem dritten Prüfschritt in dieser Ausführungsform auch bei einer Anforderung zu dem ersten Prüfschritt 32 zurück verzweigt, gegebenenfalls unter Ausgabe eines Fehlersignals. Ansonsten wird bei einer Anforderung zu dem zweiten Ausgabeschritt 37 verzweigt.

Während das Hinweissignal in dem ersten Ausgabeschritt 35 beispielsweise nur einen Ton oder eine Tonfolge umfasst, ohne dass Textinformationen oder ein gesprochenes Wort ausgegeben werden, so umfasst der Fahrhinweis in dem zweiten Ausgabeschritt 37 eine akustische, gesprochene Fahrhandlung, beispielsweise ein Hinweis auf ein Abbiegen, und eine hierauf bezogene Richtungsinformation, beispielsweise rechts, links, halblinks. Anschließend wird nach dem zweiten Ausgabeschritt 37 ebenfalls zu dem ersten Prüfschritt 32 zurückverzweigt.

## Patentansprüche

1. Navigationsvorrichtung (1) zur Ausgabe eines Fahrhinweises an einen Fahrer eines Fahrzeugs, mit einer Recheneinheit (3) zur Bestimmung von Fahrhinweisen an Positionen entlang einer Fahrtroute zur Zielführung des Fahrzeugs zu einem Fahrziel sowie zur Bestimmung der Positionen zur Bereitstellung der Fahrhinweise, **gekennzeichnet, durch** eine Ausgabeeinheit (5, 6) zur Ausgabe eines Hinweissignals zum Hinweis auf den zur akustischen Ausgabe bereitstehenden Fahrhinweis in einem vorgegebenen Abstand vor oder mit einem Erreichen einer Position zur Bereitstellung des Fahrhinweises und **durch** eine Bedieneinheit (7, 9, 10) zur Veranlassung einer akustischen Ausgabe des bereitstehenden Fahrhinweises nach einer Ausgabe des Hinweissignals.

2. Navigationsvorrichtung nach Anspruch 1, **dadurch gekennzeichnet, dass** eine Ausgabe des Fahrhinweises nach der Ausgabe des Hinweissignals und nach einer Betätigung der Bedieneinheit (7, 9, 10) nur erfolgt, wenn die Anforderung in einem vorgegebenen Abstand von der Position zur Bereitstellung des Fahrhinweises und/oder nach einer vorgegebenen Zeitspanne nach Ausgabe des Hinweissignals erfolgt ist.

3. Navigationsvorrichtung nach einem der vorhergehenden Ansprüche, **dadurch gekennzeichnet, dass** die Ausgabeeinheit für das Hinweissignal eine Lautsprechereinheit (5) zur Ausgabe eines Signaltons oder einer Signaltonfolge ist.

4. Navigationsvorrichtung nach einem der vorhergehenden Ansprüche, **dadurch gekennzeichnet, dass** der akustisch ausgegebene Fahrhinweis wenigstens eine Angabe einer Fahrtrichtung und eines Fahrmanövers umfasst.

5. Navigationsvorrichtung nach einem der vorhergehenden Ansprüche, **dadurch gekennzeichnet, dass** die Bedieneinheit (19) an einem Lenkrad (20) des Fahrzeugs angeordnet ist.

6. Navigationsvorrichtung nach einem der Ansprüche 1-4, **dadurch gekennzeichnet, dass** die Bedieneinheit als eine Spracheingabeeinheit (10) ausgeführt ist.

7. Navigationsvorrichtung nach einem der vorhergehenden Ansprüche, **gekennzeichnet durch** eine optische Ausgabeeinheit (16) zur Darstellung des Fahrhinweises (17, 23) ab dem Zeitpunkt der Ausgabe des Hinweissignals.

8. Verfahren zur Ausgabe eines Fahrhinweises an einen Fahrer eines Fahrzeugs, wobei Fahrhinweise zur Führung eines Fahrzeugs entlang einer Fahrtroute zu einem Fahrziel sowie Positionen zur Bereitstellung der Fahrhinweise entlang der Fahrtroute bestimmt werden, **dadurch gekennzeichnet, dass** in einem vorgegebenen Abstand vor oder mit einem Erreichen einer Position zur Bereitstellung eines Fahrhinweises ein Hinweissignal auf einen bereitstehenden Fahrhinweis ausgegeben wird und dass der Fahrhinweis nur nach Eingabe einer nachfolgenden Anforderung durch einen Benutzer akustisch ausgegeben wird.

9. Verfahren nach Anspruch 8, **dadurch gekennzeichnet, dass** als Hinweissignal ein Signalton oder eine Signaltonfolge ausgegeben wird.

10. Verfahren nach einem der Ansprüche 8-9, **dadurch gekennzeichnet, dass** der Fahrhinweis optisch zusätzlich zu der akustischen Ausgabe ausgegeben wird.
